# EUROPÄISCHE PATENTSCHRIFT

(11) **EP 2 060 873 B1**
(45) Veröffentlichungstag und Bekanntmachung des Hinweises auf die Patenterteilung: **30.03.2016**
(21) Anmeldenummer: 08019575.3
(22) Anmeldetag: 08.11.2008
(51) Int. Cl.: G01C 21/16, G01C 21/00, F41G 7/22, F41G 7/34, F41G 7/36, G06K 9/00, G06T 7/00

(54) **Verfahren zur Stützung der Trägheitsnavigation eines Flugkörpers**
Method of supporting the inertial navigation of an aircraft
Procédé destiné au soutien de la navigation inertielle d'un aéronef

(30) Priorität: 17.11.2007 DE 102007054950
(43) Veröffentlichungstag der Anmeldung: 20.05.2009
(73) Patentinhaber: MBDA Deutschland GmbH, 86529 Schrobenhausen (DE)
(72) Erfinder: Schweyer, Nikolaus, 81739 München (DE); Holicki, Michael Dr., 86447 Aindling (DE); Zoz, Jürgen Dr., 86316 Friedberg (DE)
(74) Vertreter: Krebs, Jörg

(56) Entgegenhaltungen:
- DE-C1- 3 830 496
- GB-A- 2 289 389

## Beschreibung

Die Erfindung betrifft ein Verfahren zur Stützung der Trägheitsnavigation eines eine vorwärts schauende Kamera und ein Inertialnavigationssystem INS aufweisenden niedrig fliegenden Flugkörpers unter Benutzung von Referenzbildern.

Es ist bekannt, die Navigation eines Flugkörpers mit Hilfe von Satellitennavigationssystemen (GPS = Global Positioning System) durchzuführen. Die Erfahrung hat aber gezeigt, dass bei deren Anwendung, insbesondere auf niedrig fliegende Flugkörper, solche Navigationssysteme leicht zu stören sind.

Auch die Navigation eines solchen Flugkörpers mit Hilfe von Trägheitsnavigationssystemen ist ebenfalls fehlerbehaftet, da solche Systeme auf langen Flugstrecken der zu steuernden Flugkörper Navigationsfehler aufakkumulieren.

Schließlich ist in Übereinstimmung mit der bekannten Map-Matching-Navigation das Navigieren eines Flugkörpers nach einem Satellitenbild von der Firma Opto Knowledge Systems Inc. vorgeschlagen worden. Hierzu ist aber ein Einzelbildabgleich mit dem jeweiligen Satellitenbild erforderlich, was eine senkrecht nach unten gerichtete Kamera im Flugkörper erforderlich macht. Die den Suchköpfen solcher Flugkörper zugeordneten Kameras - IR- oder sichtbar - schauen aber vorwärts, so dass dieser Vorschlag infolge unterschiedlicher Bildcharakteristiken der miteinander zu vergleichenden Bilder in die Praxis keinen Eingang gefunden hat.

Aus der DE 44 16 557 A 1 ist bekannt, zur Stützung der Trägheitsnavigation eines ein entferntes Ziel autonom ansteuernden Flugkörpers mittels eines unter einem endlichen Winkel seitwärts zur Flugrichtung blickenden das überflogene Gelände erfassenden Sensor Geländedaten zu ermitteln, aus denen durch Vergleich mit bekannten Geländedaten eine Position des Flugkörpers gewonnen wird, wobei diese Position mit der von der Trägheitsnavigation bestimmten Position verglichen und das Trägheitsnavigations- System nach Maßgabe dieses Vergleiches korrigiert wird. Hierzu sind über den seitwärts zur Flugrichtung blickenden als Kamera ausgebildeten Sensor sogenannte Mikrostrukturen - z. B. 3 x 3 Nachbarschaften mit hohem Kontrast - aus den fortlaufend erzeugten Bildern zu tracken und als signifikante 3D-Punkte in die Referenzebene zu projizieren, um durch Abgleich zwischen Referenzbild und Geländebild die aktuelle Position und Lage des Flugkörpers zu bestimmen.

DE 3830 496 C1 betrifft eine Vorrichtung zum Erkennen und Verfolgen von Objekten anhand von solchen charakteristischen Merkmalen (z. B. einer Kontur/Signatur) an denen diese von weitem aus der Luft vor einem Hintergrund identifizierbar sind mit Hilfe eines abbildenden Sensors und einer Verarbeitungsschaltung für die von diesem gewonnenen Signale zum Vergleich mit vorher abgespeicherten Referenzsignalen. Die Ausgangssignale eines an sich bekannten lagestabilisierten abbildenden Sensors werden bezüglich der darin enthaltenen Helligkeitsgradienten zum Zweck der Extraktion von Kantenlinien des Objektes analysiert. Aus den lokalen Extremwerten der Helligkeitsgradienten werden mittels adaptiver Schwellwertbildung in der Signalverarbeitungsschaltung Kantenpunkte selektiert. Durch eine Parametertransformation werden jeweils auf einer Geraden liegende Kantenpunkte durch lokale Extremwerte dargestellt, die durch ihre Parameter (z. B. Steigung und Achsenabschnitt) jeweils einen Geradenabschnitt kennzeichnen. Die gemessenen Parameter werden mit den abgespeicherten Referenz-Parametern unter Berücksichtigung gemessener Bahndaten (wie Dauer, Weg, Höhe, Lage des Objektes, Kurs) in einem Auswerterechner verglichen, und das Vergleichsergebnis (Position, Objekt-Richtung) wird zur Weiterverarbeitung an dessen Ausgang zur Verfügung gestellt und/oder angezeigt. Dieses Vergleichsergebnis dient in der weiteren Verarbeitung zur Lokalisierung eines definierten Straßenabschnitts, auf dem dann nach Zielen gesucht wird. Mit Hilfe der Linienstrukturen im Bild werden also gezielt Straßenabschnitte im Bild mit bekannter Richtung gesucht. Auf diesen Straßenabschnitten werden Ziele vermutet. Das Lokalisieren dieser Straßenabschnitte dient hierbei der Einschränkung des Suchbereiches, innerhalb dem nach Zielen zu suchen ist, und nicht zur Navigation des Flugkörpers.

Der Erfindung liegt daher die Aufgabe zugrunde, ein neues Verfahren zur Navigation eines über weite Strecken niedrig fliegenden, eine im IR- oder sichtbaren Bereich arbeitende Kamera und eine Trägheitsmesseinrichtung IMU (Inertial Measurement Unit) als Teil eines Inertialnavigationssystems INS (InertialNavigation-System) aufweisenden Flugkörpers zu schaffen, das ohne eine GPS-Stützung und ohne nach unten schauende Kamera arbeitet.

Ausgehend von der Tatsache, dass sich aus 2D-Kartenmaterial, Luft- oder Satellitenbildern sowie anderen Referenzstrukturen Liniensegmente extrahieren lassen, die mit der Projektion von aus der Kamera-Bildfolge ermittelten 3D-Linien abgeglichen werden können - wobei aus O. Faugeras: "Three Dimensional Computer Vision", MIT Press 2001, Abschnitt6. 10., (S. 230 ff) das Verfahren zur linienbasierten 3D-Rekonstruktion bekannt ist - ist diese Aufgabe erfindungsgemäß durch die Merkmale des Patentanspruchs 1 gelöst.

Weitere Merkmale der Erfindung ergeben sich aus den Unteransprüchen.

Das Verfahren nach der Erfindung zeichnet sich also dadurch aus, dass durch Abgleich einer aus den Daten eines flugkörpergestützten Inertialnavigationssystems INS und einer vorwärts schauenden Kamera bestimmten 3D-Rekonstruktion der Szene mit 2D-Referenzmaterial die aktuelle Position und Lage des Flugkörpers bestimmt werden kann. Als Grundlage des Abgleiches dient hierzu die aus der Bildfolge der IR-Kamera durch Standardverfahren (siehe Faugeras) rekonstruierte 3D-Struktur der von der vorwärts schauenden Kamera jeweils erfassten sichtbaren Szene.

Die Erfindung ist nachfolgend an Hand eines in der Zeichnung in Verbindung mit einem Flugkörper dargestellten Funktionsschemas beschrieben.

Ein sich mittels eines eine Trägheitsmesseinrichtung IMU aufweisendes Inertialnavigationssystems INS über weite Flugstrecken selbsttätig navigierender niedrig fliegender Flugkörper FK weist eine vorwärts schauende Beobachtungskamera BK auf, deren fortlaufend aufgenommene Bildfolge benutzt wird, um durch Abgleich der auf diese Weise gewonnen Sensordaten in einer Vergleichseinheit VE mit den dort vorliegenden 2D-Referenzmaterial in der Einheit KMU seine Position und Lage zu bestimmen zwecks Stützung seiner Inertialnavigation.

Hierzu werden aus den Einzelbildern der von der Kamera BK aufgenommenen Bildfolge eine Menge von Liniensegmenten extrahiert, die z. B. über einen Canny-Operator gewonnen werden.

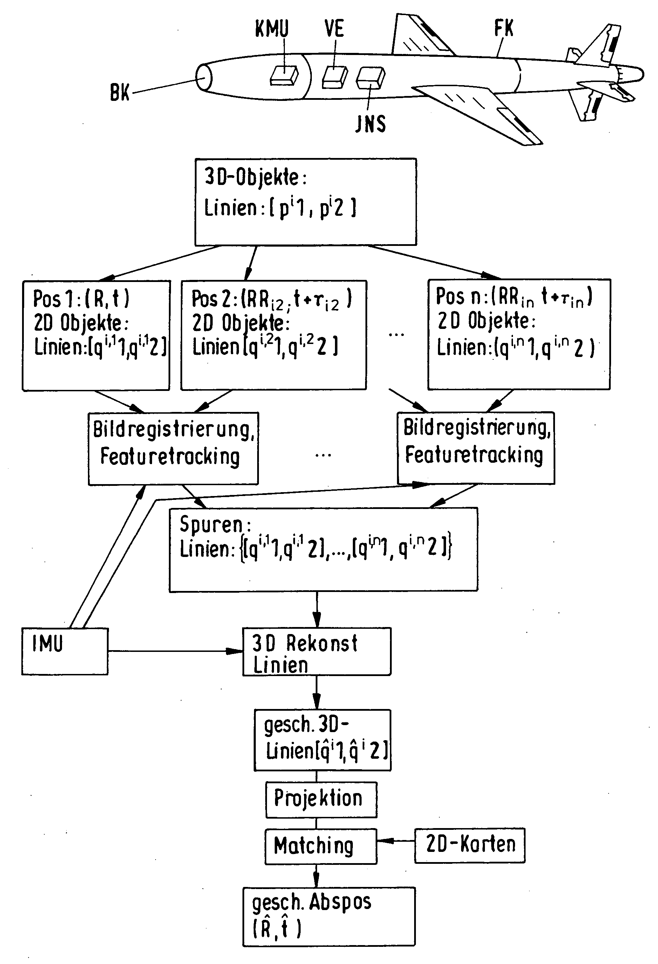

Die Daten der Bildfolge werden mit den von der Trägheitsmesseinrichtung IMU gelieferten Daten synchronisiert, so dass für jedes Bild eine Schätzung von aktueller Position und Lage des Flugkörpers zur Verfügung steht. Aufgrund von Drifteffekten wird dabei die Absolutposition relativ ungenau sein, während ein kurzer Ausschnitt aus der Bildfolge die Kamerabewegung in Folge der Bewegung des Flugkörpers relativ zum ersten Bild des Ausschnittes genau genug für eine 3D-Rekonstruktion bei bekannter Kameraposition sein wird. Für zwei aufeinander folgende Bilder der Folge wird eine Homographie H berechnet, die diese aufeinander abbildet. Dazu werden mögliche korrespondierende Features aus beiden Bildern ermittelt, was durch grobe Ähnlichkeitskriterien wie Position und Orientierung der Features sowie Eigenschaften wie Linienlängen und ähnliches geschieht. Aus diesen Korrespondenzen wird durch quadratische Minimierung H bestimmt. Nach Registrierung der aufgenommenen Bilder per Homographie werden die endgültigen Korrespondenzen gefunden, wobei Objekte aus Bild 1 die dabei in Bild 2 nicht gefunden wurden, durch die Homographie H ins Bild 2 abgebildet werden, so dass diese für die nächste Bildregistrierung als virtuelle Objekte zur Verfügung stehen.

Das vorstehend beschriebene Verfahren ist nur eines von möglichen Verfahren zur Spurbildung, die Erfindung ist daher darauf nicht beschränkt.

Es werden also Spuren von Objekten über die Bildfolge gebildet, deren Lücken durch die virtuellen Objekte überbrückt sind. Das Ergebnis dieser Spurbildung sind Bilder von Linienobjekten aus den Kamerapositionen. Diese Spuren werden dazu verwendet, um die 3D-Struktur der Objekte zu bestimmen. Dabei wird davon ausgegangen, dass die Trägheitsmesseinrichtung IMU genau genug ist, um die 3D-Rekonstruktion aufgrund ihrer Daten durchzuführen. Die 3D-Rekonstruktion der Linien erfolgt also aufgrund der bekannten relativen Kameraposition. Der Trägheitsmesseinrichtung IMU ist ein Kalmanfilter zugeordnet, der Abschätzungen für die Güte der IMU-Daten enthält. Hierzu können empirische Untersuchungen als Abschätzungen für die Genauigkeit der Linienextraktion verwendet werden. Durch Berechnung der Fehlerfortpflanzung werden mit diesen Daten Qualitätsmasse für die 3D-Objekte gefunden und nur die Objekte weiterverarbeitet, deren Qualität hinreichend groß ist.

Die extrahierten 3D-Liniensegmente dienen dem Abgleich mit dem im Flugkörper vorhandenen 2D-Referenzmaterial zur Korrektur von auftretenden Navigationsfehlern. Das Referenzmaterial wird vor dem Flug aus Landkarten, Satellitenbildern oder Luftbildern gewonnen, in dem aus diesen Liniensegmente extrahiert werden (z. B. automatisch in der beschriebenen Weise oder auch interaktiv). Die aus der Bildfolge extrahierte 3D-Linienstruktur wird in die Perspektive der Referenz projiziert und mit den Referenzlinien abgeglichen.

Aus diesem Abgleich wird eine horizontale Navigationskorrektur bei hinreichend vielen Kanten unterschiedlicher Richtung eine volle 3D-Navigationskorrektur berechnet. Dies geschieht an Hand des in der Zeichnung dargestellten Funktionsschemas.

Werden in der von dem Flugkörper FK überflogenen Szene, linienartige Strukturen (3D-Objekte) sichtbar, so werden die Anfangs- und Endpunkte dieser 3D-Liniensegmente in einem globalen kartesischen Koordinatensystem bezeichnet.

Die Kamera BK des Flugkörpers nimmt von dieser Szene n Bilder aus verschiedenen Perspektiven auf. Dabei werden die Position und die Lage der Kamera zum Zeitpunkt der ersten Aufnahme (Position 1) relativ zu einem globalen Koordinatensystem durch eine Drehmatrix und einen Translationsvektor charakterisiert. Position und Lage zur Zeit der k-ten Aufnahme (Position k) werden durch eine weitere Drehmatrix und einen weiteren Translationsvektor charakterisiert, durch welche die Rotation und die Translation von dem Kamerasystem bei der Position 1 relativ zum Kamerasystem bei der Position k angegeben wird. Für die Lage und Position der Kamera in der Position 1 liegen Schätzungen aus dem Inertialnavigationssystem vor. Dabei wird davon ausgegangen, dass die Lage und die Position der Kamera aufgrund der langen Flugstrecke vom Start des Flugkörpers bis zur Position 1 relativ ungenau sind (diese Größen werden durch das beschriebene Verfahren bestimmt), während die Lage und die Position der Kamera wegen der vergleichsweise kurzen Wegstrecke von Position 1 bis Position n genau genug für eine 3D-Rekonstruktion sind.

Aus jedem der Bilder der Bildfolge werden 2D-Liniensegmente extrahiert, deren Anfangs und Endpunkte bezeichnet werden, wobei die Liniensegmente eines Bildes indiziert werden.

Im nächsten Schritt werden die Liniensegmente über die Bildfolge getrackt. Dies geschieht dadurch, dass für je zwei aufeinander folgende Bilder eine Homographie berechnet wird, die ein Bild auf das andere abbildet, so dass anschließend den Liniensegmenten aus dem einen Bild Liniensegmente aus dem anderen Bild zugeordnet werden können. Für die Grobregistrierung können dabei die Daten der Trägheitsmesseinrichtung IMU verwendet werden. Das Ergebnis sind Spuren von 2D-Liniensegmenten, wobei jede Spur die 2D-Koordinaten einer Linie in den einzelnen Bildern, in denen diese Linie gesehen wurde, enthält.

Unter Verwendung der Daten der Trägheitsmesseinrichtung IMU wird dann für jede Spur mit einer ausreichenden Zahl von Elementen eine 3D-Rekonstruktion durchgeführt und dabei die 3D-Koordinaten von Anfangs- und Endpunkt der Linie im System von Position 1 bestimmt. Entsprechend der Hypothese für Lage und Position dieses Systems relativ zum globalen Koordinatensystem wird dieses 3D-Modell dann in die Perspektive der 2D-Referenz dargestellt, in der Kartenmaterialunit KMU projiziert und mit dem dort vorhandenen 2D-Referenzmaterial abgeglichen. Aus dem Abgleich wird eine neue Schätzung für Lage und Position der Kamera in Position 1 bestimmt, die dann zur Korrektur der Inertialnavigation des Flugkörpers FK dient.

## Patentansprüche

1. Verfahren zur Stützung der Trägheitsnavigation eines Flugkörpers (FK) mit einem eine Trägheitsmesseinrichtung (IMU) aufweisenden Inertialnavigationssystem (INS) und einer vorwärtsschauenden Kamera zur fortlaufenden Aufnahme einer Bildfolge einer von dem Flugkörper (FK) überflogenen Szene, wobei die fortlaufend aufgenommene Bildfolge Daten für einen die Trägheitsnavigation stützenden Abgleich der Daten mit im Flugkörper (FK) gespeicherten Referenzdaten liefert,
wobei
die Kamera von der überflogenen Szene Bilder aus verschiedenen Perspektiven aufnimmt, wobei die Position und die Lage der Kamera relativ zu einem globalen Koordinatensystem zum Zeitpunkt einer ersten Aufnahme an einer Position 1 durch eine Drehmatrix und einen Translationsvektor charakterisiert werden, und die Position und die Lage zur Zeit einer k-ten Aufnahme durch eine weitere Drehmatrix und einen weiteren Translationsvektor charakterisiert werden, durch welche die Rotation und die Translation von dem Kamerasystem bei der Position 1 relativ zu dem Kamerasystem bei der Position k angegeben werden, wobei
aus jedem der Bilder der Bildfolge 2D-Liniensegmente extrahiert und Anfangs- und Endpunkte der 2D-Liniensegmente bezeichnet werden, wobei die 2D-Liniensegmente indiziert werden, wobei
die 2D-Liniensegmente über die Bildfolge verfolgt und Spuren von den 2D-Liniensegmenten also die 2D-Koordinaten der 2D-Liniensegmente in den einzelnen Bildern ermittelt werden, wobei jede Spur die 2D-Koordinaten eines Liniensegments in den einzelnen Bildern enthält, in denen dieses Liniensegment gesehen wurde,
wobei aus der aufgenommenen Bildfolge der überflogenen Szene durch eine 3D-Rekonstruktion eine Menge von 3D-Liniensegmenten bestimmt wird und die 3D-Liniensegmente in die Perspektive der im Flugkörper (FK) zur Verfügung stehenden, aus Landkarten, Satelliten- oder Luftbildern ermittelten 2D-Referenzbilder projiziert werden, indem unter Verwendung der Daten der Trägheitsmesseinrichtung (IMU) für jede Spur eine 3D-Rekonstruktion durchgeführt wird und dabei die 3D-Koordinaten von Anfangs- und Endpunkt des 3D-Liniensegments im System von Position 1 bestimmt werden, und
basierend auf in der Trägheitsmesseinrichtung (IMU) vorliegenden Größen für die Lage und die Position der Kamera relativ zu dem globalen Koordinatensystem die 3D-Liniensegmente in die Perspektive der 2D-Referenzbilder projiziert und mit dort vorhandenen linienhaften 2D-Referenzstrukturen abgeglichen wird, wobei
durch den Abgleich der linienhaften 2D-Referenzstrukturen mit den projizierten 3D-Liniensegmenten die aktuelle Position und Lage des Flugkörpers (FK) zwecks Stützung seiner Trägheitsnavigation bestimmt werden, indem aus dem Abgleich eine Schätzung für die Lage und die Position des Flugkörpers (FK) an der Position 1 bestimmt wird, die dann zur Korrektur der Trägheitsnavigation des Flugkörpers (FK) dient.

2. Verfahren nach Anspruch 1, **dadurch gekennzeichnet, dass** die linienhaften Referenzstrukturen aus Landkarten, Satelliten- oder Luftbildern ermittelt und in den Flugkörper (FK) eingespeist werden.

3. Verfahren nach den Ansprüchen 1 und 2, **dadurch gekennzeichnet, dass** zwei aufeinander folgende Bilder der überflogenen Szene als eine durch quadratische Minimierung zu bestimmende Homographie registriert werden.

4. Verfahren nach den Ansprüchen 1 bis 3, **dadurch gekennzeichnet, dass** die 2D-Liniensegmente aus einem Bild einer Bildfolge, die im nachfolgenden Bild der Bildfolge real nicht zu finden sind, in das zweite Bild als virtuelle 2D-Liniensegmente abgebildet werden zwecks Bildung von Spuren von den 3D-Liniensegmenten für den Vergleich mit den Referenzbildern.

5. Verfahren nach den Ansprüchen 1 bis 4, **dadurch gekennzeichnet, dass** die aus der aktuellen Bildfolge extrahierten 2D-Liniensegmente unter Verwendung von Daten des Inertialnavigationssystems (INS) des Flugkörpers (FK) synchronisiert werden, ehe aus diesen Daten eine 3D-Rekonstruktion erfolgt.

6. Verfahren nach den Ansprüchen 1 bis 5, **dadurch gekennzeichnet, dass** die Güte der rekonstruierten 3D-Liniensegmente unter Verwendung der Genauigkeitsdaten eines dem Inertialnavigationssystem (INS) zugeordneten Kalmanfilters durch Fehlerrechung bestimmt wird.

7. Verfahren nach den Ansprüchen 1 bis 3, **dadurch gekennzeichnet, dass** zur Aufnahme der Bildfolge der vom Flugkörper (FK) überflogenen Szene eine IR-Kamera verwendet wird.

## Claims

1. Method for supporting the inertial navigation of an aircraft (FK) with an inertial navigation system (INS) having an inertial measurement device (IMU) and a forward facing camera for continuously recording an image sequence of a scene above which the aircraft (FK) travels, wherein the continuously recorded image sequence provides data for comparing the data with reference data stored in the aircraft (FK) to support the inertial navigation,
wherein the camera records images from various perspectives of the scene over which the aircraft travels, wherein the position and the orientation of the camera relative to a global coordinate system at the time of a first recording at a position 1 are **characterized by** a rotation matrix and a translation vector, and the position and the orientation at the time of a k-th recording are **characterized by** a further rotation matrix and a further translation vector by which the rotation and the translation of the camera system at position 1 relative to the camera system at position k are given, wherein 2D line segments are extracted from each image of the image sequence and starting and end points of the 2D line segments are designated, wherein the 2D line segments are indexed, wherein the 2D line segments are tracked over the image sequence and tracks of the 2D line segments, that is to say the 2D coordinates of the 2D line segments, in the individual images are ascertained, wherein each track contains the 2D coordinates of a line segment in the individual images in which said line segment was seen, wherein a set of 3D line segments is determined from the recorded image sequence of the scene above which the aircraft travels by way of a 3D reconstruction, and the 3D line segments are projected into the perspective of the 2D reference images which are available in the aircraft (FK) and are ascertained from maps, satellite or aerial images, by carrying out a 3D reconstruction for each track using the data of the inertial measurement device (IMU) and in the process determining the 3D coordinates of the starting and end points of the 3D line segment in the system of position 1, and
based on variables for the orientation and the position of the camera relative to the global coordinate system that are present in the inertial measurement device (IMU), the 3D line segments are projected into the perspective of the 2D reference images and compared with line-type 2D reference structures that are present • there, wherein the current position and orientation of the aircraft (FK) are determined by way of the comparison of the line-type 2D reference structures with the projected 3D line segments for the purposes of supporting its inertial navigation by determining from the comparison an estimate for the orientation and the position of the aircraft (FK) at the position 1, which then serves to correct the inertial Navigation of the aircraft (FK).

2. Method according to Claim 1, **characterized in that** the line-type reference structures are ascertained from maps, satellite or aerial images and are fed to the aircraft (FK).

3. Method according to Claims 1 and 2, **characterized in that** two successive images of the scene above which the aircraft travels are registered as a homography to be determined by quadratic minimization.

4. Method according to Claims 1 to 3, **characterized in that** the 2D line segments from one image of an image sequence that in reality cannot be found in the successive image of the image sequence are imaged into the second image as virtual 2D line segments for the purposes of forming tracks of the 3D line segments for the comparison with the reference images.

5. Method according to Claims 1 to 4, **characterized in that** the 2D line segments extracted from the current image sequence are synchronized using data of the inertial navigation system (INS) of the aircraft (FK) before a 3D reconstruction from said data takes place.

6. Method according to Claims 1 to 5, **characterized in that** the quality of the reconstructed 3D line segments is determined using the accuracy data of a Kalman filter associated with the inertial navigation system (INS) by way of error calculation.

7. Method according to Claims 1 to 3, **characterized in that** an IR camera is used for recording the image sequence of the scene above which the aircraft (FK) travels.

## Revendications

1. Procédé d'assistance à la navigation inertielle d'un missile (FK), comprenant un système de navigation inertielle (INS) pourvu d'un dispositif de mesure inertielle (IMU) et une caméra d'observation vers l'avant pour enregistrer en continu une séquence d'images d'une scène survolée par le missile (FK), la séquence d'images enregistrée en continu fournissant des données pour une comparaison assistant la navigation inertielle des données avec des données de référence mémorisées dans le missile (FK), la caméra enregistrant des images de la scène survolée depuis différentes perspectives, la position et la situation de la caméra par rapport à un système de coordonnées global à l'instant d'un premier enregistrement à une position 1 étant **caractérisées par** une matrice de rotation et un vecteur de translation, et la position et la situation de la caméra à l'instant d'un k-ième enregistrement étant **caractérisées par** une matrice de rotation supplémentaire et un vecteur de translation supplémentaire, par lesquels sont indiquées la rotation et la translation du système de caméra à la position 1 par rapport au système de caméra à la position k, des segments de ligne en 2D étant extraits de chacune des images de la séquence d'images et les points de début et de fin des segments de ligne en 2D étant dessinés, les segments de ligne en 2D étant munis d'un indice, les segments de ligne en 2D étant suivis sur la séquence d'images et les traces des segments de ligne en 2D, c'est-à-dire les coordonnées 2D des segments de ligne en 2D dans les images individuelles étant déterminées, chaque trace contenant les coordonnées 2D d'un segment de ligne dans les images individuelles dans lesquelles a été vu ce segment de ligne, une pluralité de segments de ligne en 3D étant définie à partir de la séquence d'images enregistrée de la scène survolée par une reconstruction 3D et les segments de ligne en 3D étant projetés dans la vue en perspective des images de référence 2D disponibles dans le missile (FK) et déterminées à partir de cartes géographiques, d'images de satellite ou d'images aériennes en ce qu'une reconstruction 3D est effectuée pour chaque trace en utilisant les données du dispositif de mesure inertielle (IMU) et en définissant les coordonnées 3D du point de début et de fin du segment de ligne en 3D dans le système de la position 1 et, en se basant sur les grandeurs présentes dans le dispositif de mesure inertielle (IMU) pour la situation et la position de la caméra par rapport au système de coordonnées global, les segments de ligne en 3D étant projetés dans la vue en perspective des images de référence 2D et comparés avec les structures de référence 2D qui y sont présentes sous forme de lignes, la position et la situation actuelles du missile (FK) étant déterminées par la comparaison des structures de référence 2D sous forme de lignes avec les segments de ligne en 3D projetés à des fins d'assistance de sa navigation inertielle en ce qu'une estimation de la situation et de la position du missile (FK) à la position 1 est définie à partir de la comparaison, laquelle estimation sert ensuite à la correction de la navigation inertielle du missile (FK).

2. Procédé selon la revendication 1, **caractérisé en ce que** les structures de référence sous forme de lignes sont déterminées à partir de cartes géographiques, d'images de satellite ou d'images aériennes et sont injectées dans le missile (FK).

3. Procédé selon les revendications 1 et 2, **caractérisé en ce que** deux images successives de la scène survolée sont enregistrées sous la forme d'une homographie à définir par réduction quadratique.

4. Procédé selon les revendications 1 à 3, **caractérisé en ce que** les segments de ligne en 2D issus d'une image d'une séquence d'images qui ne se retrouvent pas en réalité dans l'image suivante de la séquence d'images sont représentés sous la forme de segments de ligne en 2D virtuels dans la deuxième image à des fins d'illustration de traces des segments de ligne en 3D pour la comparaison avec les images de référence.

5. Procédé selon les revendications 1 à 4, **caractérisé en ce que** les segments de ligne en 2D extraits de la séquence d'images actuelle sont synchronisés en utilisant des données du système de navigation inertielle (INS) du missile (FK) avant qu'une reconstruction 3D soit réalisée à partir de ces données.

6. Procédé selon les revendications 1 à 5, **caractérisé en ce que** la qualité des segments de ligne en 3D reconstruits est définie par calcul des erreurs en utilisant les données de précision d'un filtre de Kalman associé au système de navigation inertielle (INS).

7. Procédé selon les revendications 1 à 3, **caractérisé en ce qu'**une caméra à IR est utilisée pour l'enregistrement de la séquence d'images de la scène survolée par le missile (FK).
